# EUROPEAN PATENT SPECIFICATION

(11) **EP 4 388 343 B1**
(45) Date of publication and mention of the grant of the patent: **08.04.2026**
(21) Application number: 21953759.4
(22) Date of filing: 19.08.2021
(51) Int. Cl.: G01S 7/481, G01S 7/484, G01S 7/486

(54) **LIDAR HAVING INVIDIDUALLY ADDRESSABLE, SCANNABLE AND INTEGRATABLE LASER EMIITERS**
LIDAR MIT UNFÄHIG ADRESSIERBAREN, ABTASTBAREN UND INTEGRIERBAREN LASER-EMIPITTERN
LIDAR COMPORTANT DES ÉMETTEURS LASER INDIVIDUELLEMENT ADRESSABLES, BALAYABLES ET INTÉGRABLES

(43) Date of publication of application: 26.06.2024
(73) Proprietor: Hesai Technology Co., Ltd., Shanghai 201821 (CN)
(72) Inventor: SUN, Kai, Shanghai 201821 (CN); ZHU, Xuezhou, Shanghai 201821 (CN); CHEN, Jie, Shanghai 201821 (CN); XIANG, Shaoqing, Shanghai 201821 (CN); YANG, Jin, Shanghai 201821 (CN)
(74) Representative: Appelt, Christian W.
(86) International application number: PCT/CN2021/113531
(87) International publication number: WO 2023/019513

(56) References cited:
- CN-A- 110 109 083
- CN-A- 111 337 903
- CN-A- 113 030 911
- CN-A- 113 093 203
- CN-A- 113 176 555
- US-A1- 2007 279 615
- US-A1- 2018 284 236
- US-A1- 2019 094 345
- US-A1- 2020 209 355

## Description

### FIELD OF TECHNOLOGY

This disclosure generally relates to a light detection and ranging (Lidar) system for making distance measurements. More specifically, a Lidar system that is capable of generating 3D high density point clouds of an external environment by using an emitting module that has limited laser emitters.

### BACKGROUND

The background description provided herein is for the purpose of generally presenting the context of the disclosure. What is described in this background section is neither expressly nor impliedly admitted as prior art against the present disclosure.

Lidar has been widely recognized as a critical and essential technology for autonomous vehicles. By emitting laser beams into an environment and detecting returned beams that are reflected by objects in the environment, Lidar systems can generate, in real time, large amount of distance measurement data representing a 3D contour of shape of the environment, also known as point cloud, thus allowing an autonomous vehicle to have an instant perception of surrounding obstacles. For safety reasons, an autonomous vehicle often desires a point cloud as dense as an image for any given field of view. But the density of point clouds that are generated by current Lidar systems can only go as high as 128 detection channels (each channel typically corresponds to an angular field of view and has a laser emitter) along the vertical direction, which is much sparser than the resolution of a common camera (such as 1536 pixels along the vertical direction). Therefore, the current Lidar system still has a long way to go to increase its point cloud density.

Lidar makers have attempted a range of methods to enhance the density of point clouds or the number of lines along the vertical direction. Some products increase the number of detection channels by packing more laser emitters within the products. However, even with the use of traditional semiconductor lasers, such as edge emitting lasers, this approach will inevitably increase the form factor of a Lidar system because traditional semiconductor laser emitters needs to be diced from a semiconductor substrate and then individually assembled into a printed circuit board. When a large number of laser emitters are used to increase the density of point clouds, a Lidar system made by such a method is typically bulky and has a high price, both of which are not suitable for automotive applications.

Another way to increase the density of point clouds is to use mechanical scanners to direct the laser beam generated by a single laser emitter to different directions, thus mimicking the effect of multiple lasers. Although this method can enhancing the resolution of a Lidar with less number of laser emitter, the use of mechanical scanners complicates the design of a Lidar system, increases product costs, and generates additional failure modes.

A flash Lidar system has no mechanical moving parts, like a camera, and has its key sensing components, such as laser emitters and photodetectors, fabricated with a commercial foundry process, such as CMOS. This approach is promising to align the resolution ability of a Lidar system with the ability of the semiconductor fabrication process, which, many people believe, could allow the resolution to be continuously increased. The available Lidar system made by this method still has many drawbacks. For example, such a Lidar system typically has a 2D array of laser emitters, which include hundreds of laser emitters. As all of these laser emitters are activated to generate lasers, the Lidar system consumes a large amount of electrical power, which is unsuitable to be used with a vehicle. In addition, such a Lidar system typically activates all laser emitters simultaneously to ease the operation of the product. As a result, these Lidar systems experience heavy cross-talks in their photodetectors due to the fact that many laser beams are received at similar times.

Despite the fact that many Lidar systems are currently available, they still do not have an systematic design that can balance a range of key requirements for Lidar systems to be used in autonomous vehicles, including the resolution ability, power consumption, and form factors.

US 2018/284236 A1 discloses a method for scanning a scan angle in which at least two beams are generated. The at least two beams are deflected along the scan angle, and the at least two incident beams reflected on an object are received and detected, the at least two beams being generated and detected in an offset manner with respect to one another. Furthermore, a LIDAR device for scanning a scan angle is also described.

US 2020/209355 A1 discloses an electronically scanning emitter array that includes a two-dimensional array of light emitters arranged in k emitter banks. Each of the k emitter banks can include a subset of the light emitters in the two-dimensional array and can be independently operable to emit light from its subset of emitters.

US 2019/094345 A1 discloses a laser scanner device adapted to be mounted to a vehicle, the device comprising a LiDAR module working based on a laser measuring beam and time-of-flight-measurement-principle.

### SUMMARY

Therefore, there is a need in the Lidar field to have a systematic configuration that can generate point cloud of high density, have low cost and small form factor, and use a relatively small amount of power for measurement. An objective of the present application is to provide a new Lidar system that is capable of generating high density point clouds with reduced power consumption. A Lidar system and a method of a Lidar for detecting distance information according to the present invention is defined in independent claims 1 and 11, respectively. Preferred embodiments are defined in dependent claims 2 to 10, 12 to 15.

The Lidar system according to the present application may have a vertical resolution power of about 128, 256, 512 or even greater number of channels. The architecture of this new Lidar system is capable of allowing the vertical resolution power to increase without substantially increasing the power consumption. In one embodiment, the present Lidar system includes a limited number of laser emitters arranged in a substantially 1D array. The number of laser emitters is approximately determined by the resolution power along a vertical direction. For example, if the vertical resolution power is represented by128 channels, then the present Lidar system includes 128 laser emitters arranged in a vertical direction, either in 1D array or a 2D arrangement. The laser emitters may be fabricated by a monolithic process onto a single semiconductor substrate in order to lower the cost, ease the assembly, and increase the density of measurement points.

In this application, a vertical direction, in general, refers to the rotation axis of the mechanical scanner of a Lidar system. A horizontal direction refers to the direction that is orthogonal to the vertical direction. In an embodiment, the Lidar system according to the present disclosure includes a mechanical scanner to scan the laser beams along a horizontal direction while the laser emitters are electronically and sequentially activated along the vertical direction. The vertical direction and the horizontal direction may also be referred to as first or second directions in this disclosure.

The laser emitters used in the Lidar are capable of being individually addressed, in which a laser emitter can be activated or turned off independently from other laser emitters. Moreover, a selective and electric activation of one or more of laser emitters along its arrangement direction, such as the vertical direction, are feasible, which reduces the power consumption of a Lidar system and cross-talks among the photodetectors.

The laser emitters can each generate laser beams according to a respective laser profile. For example, for a pulsed laser beam, each laser emitter may generate a unique sequence of laser pulses which have different number of pulses, pulse width, power, and intervals among adjacent pulses. For a continuous wave laser beam, the laser profile may define the frequency and power of the continuous wave. Furthermore, when a predetermined subset of laser emitters are activated simultaneously, the start times of each laser emitter may have random offsets from one another, such as a few nanoseconds, to further differentiate each laser beam. These features will allow the present Lidar system to reduce crosstalk caused by concurring laser beams that are generated either by the same system or other sources.

The new Lidar system according to the present disclosure may also include a detecting module having a plurality of photosensors arranged in 1D or 2D array for detecting reflected laser signals. The plurality of photosensors may also be made via a monolithic fabricating process. The plurality of photosensors may also be individually addressable, thus allowing them suitable for working with various arrangements of laser emitters.

According to an aspect, the present application discloses a Lidar for detecting distance information. The Lidar includes an emitting module emitting laser beams for detecting distance information and including a first array of laser emitters that are arranged along a vertical direction and separated into a plurality of banks each having a single semiconductor substrate; a scanner configured to cause the first array of laser emitters to scan along a horizontal direction; and a detecting module that detects returned laser beams generated by the first array of laser emitters and determines distance information based on returned laser beams, wherein the emitting module is configured to activating at least two laser emitters together for scanning an external environment in parallel, and the at least two laser emitters are no more than one half of the first array of laser emitters.

According to various embodiment, wherein the emitting module is configured to electronically scan the first array of laser emitters along a vertical direction without an assistance of a mechanical moving part, scan the first array of laser emitters along the vertical direction according to a firing pattern that reduces crosstalk at the detection module caused by cross-channel interference, and/or sequentially scan laser emitters within each bank, and at least two laser emitters from different banks are activated together.

According to an embodiment, laser emitters within each bank are individually addressable.

According to another embodiment, the Lidar's vertical field of view is formed by vertical fields of view of the first array of laser emitters.

According to another embodiment, the emitting module further includes a second array of laser emitters as replacements for the first array of laser emitters.

According to various embodiment, adjacent banks are offset from each other both vertically and horizontally, laser emitters are uniformly distributed within a bank, laser emitters are non-uniformly distributed within a bank, the first array of laser emitters are non-uniformly distributed along the vertical direction, and/or each bank has a same number of laser emitters.

According to various embodiments, when the at least two laser emitters are activated together, each of the activated laser emitters emits a laser beam that has a laser profile different from other activated laser emitters. The laser profile defines parameters of a plurality of laser pulses that are used for a single measurement of distance. The emitting module is configured to adjust the laser profile in real-time based on a detection result of the detecting module. The emitting module is further configured to adjust a starting time for the activated laser emitters.

According to another embodiment, the scanner includes a spinning mirror whose spinning frequency is lower than a vertical scanning frequency of the first array of laser emitters. The spinning mirror has at least two reflecting surfaces.

According to another embodiment, the Lidar further comprises a mirror that is disposed between the scanner and the emitting module and configured to direct a laser beam generated by the emitting module to the scanner. The mirror has a size that is smaller than a spot of a return beam such that a substantial portion of the returned laser beams bypasses the mirror via peripheral zones of the mirror and impinges on the detection module.

According to another aspect, the present application discloses a method of a Lidar for detecting distance information. The method comprises arranging a first array of laser emitters along a vertical direction; separating the first array of lasers into a plurality of banks each having a plurality of laser emitters coupled to a substrate; activating at least two laser emitters together for scanning an external environment in parallel, wherein the at least two laser emitters are no more than one half of the first array of laser emitters; scanning the first array of laser emitters along a horizontal direction; detecting returned laser beams generated by the first array of laser emitters; and determining distance information based on returned laser beams.

According to various embodiments, the method further comprises electronically scanning the first array of laser emitters along a vertical direction without an assistance of a mechanical moving part, scanning the first array of laser emitters along the vertical direction according to a firing pattern that reduces crosstalk at the detection module caused by cross-channel interference, sequentially scanning laser emitters within each bank, and/or activating at least two laser emitters from different banks together.

According to various embodiments, the method further comprises disposing a second array of laser emitters in the Lidar as replacements for the first array of laser emitters, offsetting adjacent banks both vertically and horizontally, uniformly arranging laser emitters within a bank, and/or arranging the first array of laser emitters non-uniformly along the vertical direction, disposing a same number of laser emitters within each bank.

According to various embodiments, when the at least two laser emitters are activated together, the method further causes each of the activated laser emitters to emit a laser beam that has a laser profile different from other activated laser emitters, adjusts the laser profile in real-time based on a detection result of the detecting module, and/or adjusts a starting time for the activated laser emitters.

### BRIEF DESCRIPTION OF THE DRAWINGS

The above and other objects, features, and advantages of various embodiments as set forth in the present disclosure will be more apparent from the following detailed description of embodiments taken in conjunction with the accompanying drawings.
FIG. 1 illustrates a system design of a Lidar system according to some embodiments of the present application.
FIG. 2 illustrates a configuration of a Lidar system according to some embodiments of the present application.
Fig. 3a illustrates a configuration of an emitting module 300 of a Lidar system according to an embodiment of the present application.
FIG. 3b illustrates another configuration of an emitting module according to an embodiment of the present application.
FIG. 3c illustrates a vertical field of view formed by a plurality of laser emitters according to an embodiment of the present application.
Fig. 4 illustrates a firing pattern of the laser emitters according to an embodiment of the present application.
Fig. 5 illustrates an exemplary sequence of laser pulses generated by a laser emitter according to an embodiment of the present application.
Fig. 6 illustrates a method for controlling the emitting module of a Lidar system according to an embodiment of the present application.

### DETAILED DESCRIPTION

It will be appreciated by those ordinarily skilled in the art that the foregoing brief description and the following detailed description are exemplary (i.e., illustrative) and explanatory of the subject matter as set forth in the present disclosure, but are not intended to be restrictive thereof or limiting of the advantages that can be achieved by the present disclosure in various implementations.

It is noted that in this disclosure and particularly in the claims and/or paragraphs, terms such as "comprises", "comprised", "comprising" and the like can have the meaning attributed to it in U.S. Patent law; e.g., they can mean "includes", "included", "including", and the like.

### Overview of the Lidar System

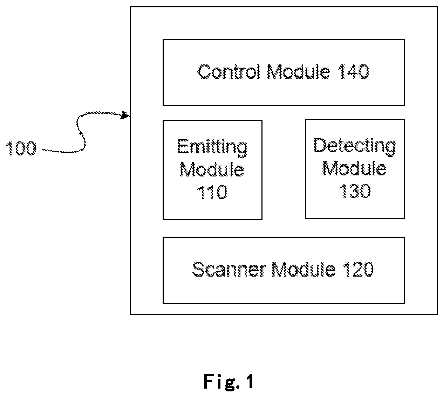

Fig. 1 illustrates a system design of a Lidar system 100 according to an embodiment of the present application. The Lidar system 100 comprises an emitting module 110, a detecting module 130, a control module 140, and a scanning module 120. The emitting module 110 comprises a plurality of laser emitters configured to generate laser beams according to the control signals provided by the control module 140. The laser beams generated by the laser emitters will be directed to an environment outside the Lidar system 100 for detecting distance and/or speed information of objects in the environment. The laser beams generated by the laser emitters may be continuous or pulses. The plurality of laser emitters may generate laser beams of the same frequency or of different frequencies. Each of the plurality of laser emitters is configured to cover a predetermined field of view, which may be determined according to characteristics of generated laser beams, such as transmitting direction, beam size, and beam divergence. The field of view of a laser emitter may be adjusted by a scanner and the combined fields of view of the plurality of laser emitters form the field of view of the Lidar system 100. Generally speaking, a field of view of the Lidar system 100 may be characterized by a horizontal field of view and a vertical field of view.

The plurality of laser emitters may be arranged in a one-dimensional array or a two-dimensional array. According to an embodiment, the laser emitters in the array may be individually addressable. Further descriptions related to individually addressing laser emitters may be found in U.S Patent No. 10,983,197, Serial No. 16/827,293, filed on March 23, 2020, titled "Adaptive emitters and receiver for Lidar systems". Although any type of laser emitters may be used for the emitting module 110, it is preferable to use laser emitters that can generate high power laser beams and are also be miniaturized such that the Lidar system can have a long detecting range and a small form factor. For example, laser emitters that are made from semiconductor materials via a foundry process, such as CMOS, are preferred, such as vertical cavity surface-emitting laser diodes (VCSEL).

The emitting module 110 may comprise driving circuits (not shown in Fig. 1) configured to control the plurality of lasers/emitters in the emitter array. According to an embodiment, the emitting module 110 includes a plurality of driving circuits configured to active a subset of the plurality of laser emitter in parallel and cause each or at least part of the subset of the laser emitters to emit a distinctive laser beam that is different from other activated laser emitters. In this way, crosstalk due to concurring laser beams can be reduced. The subset of the plurality of the laser emitter may represent at least two laser emitters, but no more than one sixteenth, eighth, quarter or half of the total number of the plurality of the laser emitters.

The Lidar system 100 of Fig. 1 may also include a detecting module 130 for detecting return laser beams that are backscattered by objects of the environment. The detecting module 130 as shown in Fig. 1 comprises a detector array, which can be, e.g., a two-dimensional array of photosensors or one linear array of photosensors. Similarly with the laser emitters, the photosensors may also be individually addressable. Further descriptions related to individually addressing photosensors may be found in U.S Patent No. 10,983,197, Serial No. 16/827,293, filed on March 23, 2020, titled "Adaptive emitters and receiver for Lidar systems". A photosensor may include one or more photodetector. Any suitable photon sensitive sensors may be used as a photodetector, such as avalanche photodiode (APD) and single-photon avalanche diodes (SPADs) and silicon photomultipliers (SiPM). According to an embodiment, each laser emitter is paired with a respective one of the photosensors. According to another embodiment, each laser emitter is paired with a plurality of photosensors. According to another embodiment, each photosensor may be paired with a plurality of laser emitters. According to yet another embodiment, the pairing between the laser emitters and the photosensors are dynamic and reconfigurable based on a real-time condition of the detecting results. According to yet another embodiment, the photosensors are arranged in an array that has a greater dimension than the laser emitters. For example, the photosensors may be arranged in a 2D array while the laser emitters of the emitting module are arranged in a 1D array.

The emitting module 110 and the detecting module 130 are coupled to a control module 140. The control module 140 generates commands or control signals to the emitting module 110 and/or the detecting module 130 and receives output signals generated by the detecting module 130. Example commands may include commands that activate or deactivate a selected subset of laser emitters, specify a firing pattern of the emitting module, specify a detecting pattern of the detecting module, and determine other operational parameters of the laser emitters and photosensors. The control unit 130 may also receive sensor output signals from the detecting module 130 for further processing the output signals, including determining distance corresponding to each measurement.

The Lidar system 100 may include control unit, functions, algorithms, operations, circuits or the methods that can be implemented using software, hardware or firmware or a combination thereof. In some embodiments, the control unit may comprise one or more processors and at least one memory for storing program instructions. The processors may be disposed internally within the Lidar system 100. Alternatively, the processors may be external to the Lidar system but in communication with the Lidar system. The processor(s) can be a single or multiple microprocessors, application specific integrated circuit (ASIC), field programmable gate arrays (FPGAs), or digital signal processors (DSPs) capable of executing particular sets of instructions. According to some embodiments, computer-readable instructions may be provided and stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory. The control unit may be a standalone device or system that is in communication with the Lidar system. Alternatively, the control unit may be a component of the Lidar system. The methods disclosed herein such as generating emission pattern and/or generating sensing pattern in response to a real-time condition can be implemented in hardware components or combinations of hardware and software such as, for example, ASICs, special purpose computers, or general-purpose computers.

The Lidar system 100 of Fig. 1 may also include a scanner module 120 for causing the laser beams generated by the laser emitters to scan the external environment such that each laser emitters may have a plurality of fields of view. Without the scanner module 120, the laser emitters have a stationary field of view. The scanner 120 increases the field of view of each laser emitter, thus allowing the Lidar system 100 to use a limited number of laser emitters to scan a relatively much larger area of the external environment. For example, when laser emitters are arranged in a 1D array along a vertical direction, their combined fields of view may cover only a narrow vertical slice of the external environment and are inadequate to provide a needed view of areas in front of a moving vehicle. They also cannot provide a full 360 degree of perception around the vehicle. When a scanner module 120 is included in the Lidar system 100, the fields of view of the laser emitters can be directed to various locations of the external environment. According to an embodiment, the scanner may be an actuator that rotates the emitting module and the detecting module together around a vertical axis, thus generating a surround view of the Lidar system 100. For example, the actuator may be a brushless electric motor or any other similar mechanisms. According to another embodiment, the scanner may be an oscillating optical component, such as a MEMS mirror. According to another embodiment, the scanner may be a spinning optical component that redirects a laser beam to a direction different from the impinging direction. For example, the spinning optical component my cause the beams of the laser emitters to scan a 360-degree circle or a partial circle along a horizontal direction. The optical spinning optical component may include a prism, a rotating mirror, an oscillating mirror or a combination thereof.

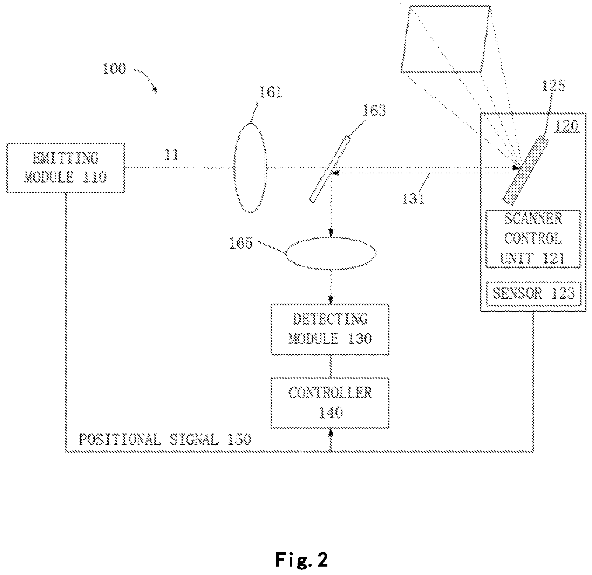

Fig. 2 illustrates an exemplary configuration of a Lidar system 100 according to an embodiment of the present application. Reference numerals in Fig. 2 that are identical to Fig. 1 have the same meaning, whose descriptions will not be repeated with regard to Fig. 2. Adding to the emitting module 110, the detecting module 130, control module 140, and the scanning module 120, the Lidar system 100 of Fig. 2 further shows a scanner 125, a scanner control unit 121, a scanner position sensor 123, and a plurality of optical components, such as lens assembly 161, 165, and mirror 163. As shown in Fig. 2, a plurality of laser beams 11 (as they overlap each other from current perspective, thus it seems like one beam) generated by the emitting module 110 first passes through a lens assembly 161 (e.g., collimation lens, collimation lens assembly) for collimating and/or focusing the laser beam 11and then passes through an aperture in a mirror 163. The laser beams 11, after passing through the aperture of the mirror 163, impinge on a surface of the scanner 125, which changes a direction of the laser beams 11 and directs it to an external spot. When an object is located within the propagating path of the laser beams 11, it will reflect the laser beams 11. Certain reflected laser beams 11 will return and impinge on the scanner 125. The returned laser beams 131, after being deflected by the scanner 125, may impinge on a surface of the mirror 163 that surrounds an aperture and then pass through one or more optical components 165 so that the returned light beams can be directed, focused onto an active region of a photosensor of the detecting module 130. According to an embodiment, the Lidar system 100 can include any other suitable optical components such as more lenses, mirrors, filters (e.g., bandpass or interference filters), apertures, beam splitters, polarizers, polarizing beam splitters, wave plates (e.g., half-wave or quarter-wave plates), diffractive elements, or holographic elements, telescope, for conditioning the output laser beam 11, including expanding, focusing, or collimating the output beam 11 to a desired beam diameter or divergence. According to an embodiment, the one or more optical components that are used for conditioning a return laser beam can include, for example, one or more mirrors (e.g., flat mirror, concave mirror, convex mirror, parabolic mirror) or lens/lens assembly to direct the returned light beams to the detector.

The mirror 163 is configured to allow signal light 11 to pass through while direct the returned laser beam 131 to the detecting module 130. The mirror 163 may include a hole, slot, or aperture at the central region that allows the laser beam 11 to pass through. As the return beam 131 may have a beam spot whose size is greater than the aperture of the mirror 163, the return beam 131 can at least be partially redirected by the mirror 163. According to another embodiment, the return beam 131 may be conditioned right after being directed by the scanner 125 such that the return beam 131 will substantially impinge on the reflecting surface of the mirror 163. The received optical signals may be converted to electrical signals by the detecting module 130, whose output may be processed by the controller 140.

According to another embodiment, the emitting module and detecting module may switch their respective positions relative to the mirror 163 such that the laser beam 11 is reflected by the mirror 163 and then impinge on the scanner 120, while the return light 131 passes through the aperture of the mirror 163 and then reaches the photosensor. According to another embodiment, the mirror 163 is configured to have a small surface area without a central aperture or hole when the mirror 163 is used to change the direction of the output beam 11. As the output beams 12 are typically collimated to a small beam size, they can be directed to a small central area of the mirror 163. At the meantime, a return beam, after traveling a long distance, typically has a large beam size such that a substantial portion of the return laser beam 131 can use the peripheral regions of the mirror 163 as a bypass. In this way, any blocking by the small central region of the mirror 163 may not affect the detectability of the return laser beam.

According to one embodiment, the scanner 125 may be configured to cause the output beam 11 to scan along a direction that is different from a longitudinal direction of the arrangement of the laser emitters. For example, the scanner 125 may causes the laser beams to scan along a horizontal direction while the laser emitters are configured to be arranged along a vertical direction. According to another embodiment, the scanner 125 may be configured to scan the output beam 11 along two directions, such as both vertical and horizontal directions. In some embodiments, the scanner 125 may include one or more scanning mirrors that are configured to rotate, oscillate, tilt, pivot, or move in an angular manner about one or more axes. The scanning mirrors may have more than one reflecting surfaces. According to an embodiment, the scanner may use at least one spinning mirror driven to rotate around one axis, which may have adjustable spinning frequencies between the range from 5 Hz to 200 Hz. According to an embodiment, when denser measurements are desired per rotation of the scanner 125, the spinning frequency may be reduced to allow denser measurements to be made for the field of view. According to an embodiment, an activating frequency of the laser emitters may also be increased. According to another embodiment, the scanner 120 may be a resonant mirror with an oscillating frequency between 100 Hz to 10,000 Hz.

The scanner 125 can be any suitable actuator or mechanism such as galvanometer scanner, a piezoelectric actuator, a polygonal scanner, a rotating-prism scanner, a voice coil motor, an electric motor (e.g., a DC motor, a brushless DC motor, a synchronous electric motor, or a stepper motor), or a microelectromechanical systems (MEMS) device and the like.

According to an embodiment, the scanner 125 may include a scanner control unit 121 that generates drive signals for the scanner 125. In some cases, the scanner 125 may further include one or more position sensors 123 configured to detect the angular position and/or angular motion of the scanner. A positional signal 150 may be transmitted to the controller 140 for determining the operation parameters of the scanner 125. Any suitable sensors can be used to detect the motion or angular position of the scanning mirror. For example, piezo-resistive, photodetector, optical position sensor (OPS), position sensitive detector (PSD) or other sensors can be used to sense the motion or position. In some cases, a PSD may be used to measure the angular position of the scanner 125. According to an embodiment, the positional signal 150 generated by the position sensor 123 may also be used by the control module 140 to coordinate the activation of laser scanners and the motion of the scanner 125, thus adjusting the distribution or resolution of measurements or point clouds across a field of view of the Lidar system.

### Configuration of the Emitting Module

The emitting module according to the present application includes a configuration of solid-state emitters suitable for electronically scanning along a single dimension ("1D solid-state E-scanning"). This configuration includes a plurality of solid-state laser emitters that are arranged along a first direction, such as the vertical direction of a field of view. The number of the plurality of solid-state laser emitters is determined by the field of view and resolution of the first direction. During range measurements, the plurality of laser emitters are sequentially and electrically activated or turned off to illuminate the entire field of view along the first direction, while the scanning of the field of view of a second direction is implemented by another mechanisms, such as mechanical spinning. The arrangement of the plurality of laser emitters along the first direction can be of any shape, such as 1D array, multiple columns that have a substantial 1D form, a 2D matrix, or any other shape that fits resolution requirements. In addition, the plurality of laser emitters are disposed along a focal plane of the transmitting optics of a Lidar system to produce well collimated laser beams. With 1D solid-state e-scanning, a Lidar system scans its external environment slice by slice and requires only enough laser emitters to cover the field of view of one direction. Thus, such a Lidar system has greater flexibility in tailoring the arrangement of the laser emitters for particular applications, controlling costs, and lowering power consumption of the system.

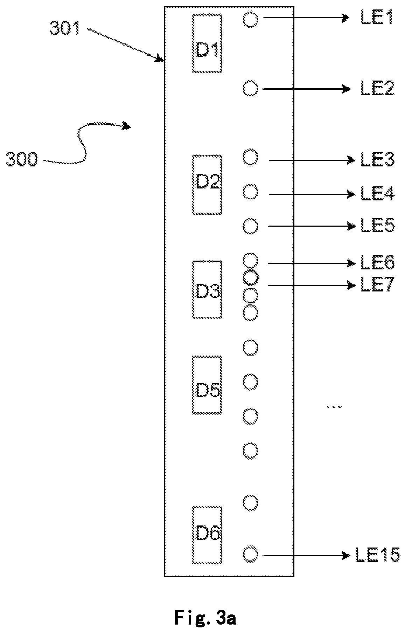

Fig. 3a illustrates a configuration of an emitting module 300 of a Lidar system according to an embodiment of the present application. The emitting module 300 includes a plurality of laser emitters LE1 ... LE15, a plurality of driving circuits D1 ... D6, and a semiconductor substrate 301. According to an embodiment, the plurality of laser emitters LE1 ... LE15 and the plurality of driving circuits D1 ... D6 are integrated into the same semiconductor substrate 301 via a monolithic fabricating process. For example, VCSEL laser emitters and the driving circuits can both be fabricated by semiconductor processing technologies and integrated onto a same substrate. According to another embodiment, each of the laser emitters LE1 ... LE15 has their own semiconductor substrate 301, and then all the laser emitters LE1 ... LE15 are mounted along the vertical direction.

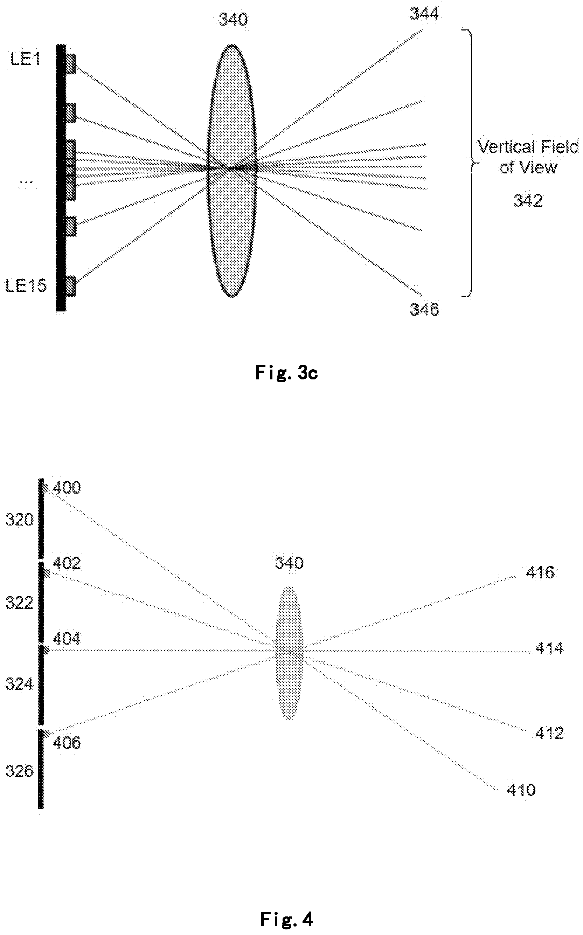

According to an embodiment, the laser emitters LE1 ... LE15 or several groups of the laser emitters LE1 ... LE15 forms the entire vertical field of view of the Lidar. Generally speaking, the number of laser emitters may be understood by a person of ordinary skill in the art as the number of channels or lines of a Lidar system, which determines the resolution of a Lidar system. As shown in Fig. 3c, the laser emitters LE1 ... LE15 are configured to transmit laser beams, via an optical system 340, along different angular directions into an external environment. A vertical field of view (VFOV) 342, as shown in Fig. 3c, represents a vertical angular coverage by the plurality of laser emitters. For example, the angular zone between two outermost laser beams 344 and 346 represents the vertical field of view covered by laser emitters LE1 to LE15. It is apparent that, for a fixed angular zone, the greater number of the laser beams is placed between the two beams 344 and 346, the smaller the angle separation between two adjacent laser beams is and the higher the resolution along the vertical field of view is. When denser laser beams are needed for a field of view, it is common to use more laser emitters, with or without the use of a scanner. Such a traditional method has drawbacks when a 2D array of laser emitters are used for generating laser beams. Specifically, the increase of a resolution along any one direction will need to add several rows or lines of laser emitters, which could substantially increase the cost of a Lidar system.

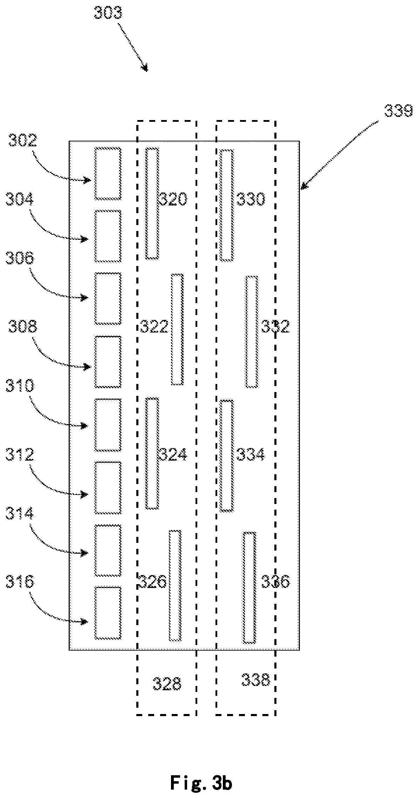

According to another embodiment, the laser emitters LE1 ... LE 15 as shown in Fig. 3a represent a subset of the laser emitters of an emitting module and forms a single illuminating bank, which may be controlled by one or more driving circuits. A Lidar system according to the present application may have a plurality of illuminating banks. The use of banks to control laser emitter can ease the assembly process, allow more flexibility to arrange the laser emitters, and reduce crosstalk. Further descriptions about illuminating banks will be provided with regard to Fig. 3b.

The plurality of laser emitters LE1 ... LE15 as shown in Fig. 3a are arranged in a 1D array according to a predetermined distribution pattern. For example, Fig.3a shows that laser emitters LE1 ... LE15 are arranged non-uniformly along a vertical direction. In general, a central area of a VFOV represents a zone in the travel direction of a vehicle and will require a higher resolution, while peripheral zones of a VFOV represent zones above or below the travel path of a vehicle and could have a lower resolution than the central zone. Thus, the laser emitters LE1, LE2, and LE3 that are designed to cover the peripheral areas of the VFOV are arranged more sparsely than that of laser emitters LE6 to LE9 (not shown), which are designed to cover the central area of VFOV. Accordingly, the pitch (separation between adjacent laser emitters) among laser emitters LE1 to LE3 is larger than that of laser emitters LE6 to LE9. The pitch of laser emitters LE3 to LE6 falls between that of LE1 to LE3 and that of LE6 to LE9. According to another embodiment, the laser emitters may be arranged according to any distribution pattern that are suitable for a particular application. For example, the plurality of laser emitters may be uniformly distributed on an illuminating bank. According to another embodiment, peripheral zones may have higher resolution depending on the applications. For example, in aerial applications, the zone beneath an aircraft, such as a drone, may require a higher resolution and should have densely distributed laser emitters. The plurality of laser emitters LE1 ... LE15 is just an example, the total number of the laser emitters can be more than 15, like 128 or 256 or 512 or even greater.

Although Fig. 3a illustrates that laser emitters forms a 1D array along the vertical direction, laser emitters may be arranged in multiple columns (especially when the number of laser emitters along vertical direction is more than 20), where each column has offsets along the horizontal direction. For example, the laser emitters LE1 ... LE15 may have two columns. The first column is formed by laser emitters LE1-LE3 (illuminating bank 320), LE10-LE12 (illuminating bank 324) and the second column is formed by LE4-LE9 (illuminating bank 322), LE13-LE15 (illuminating bank 326), similar to the arrangement shown as a first array 328 in Fig. 3b. The two columns have a small horizontal offset, such as the pitch among laser emitters LE1 to LE3, but still show a substantially 1D arrangement. An aspect ratio between a vertical dimension and a horizontal dimension may be used to determine whether laser emitters form an 1D array or not. For example, the laser emitters may be deemed to form a 1D array when the aspect ratio of the shape formed by the laser emitters is greater than 3.

Unlike the conventional technologies, the Lidar system as set forth in the present application does not require a two-dimensional array of laser emitters to generate point clouds. According to an embodiment of the present application, a Lidar system can combine a one-dimensional array of laser emitters with a scanner to cover a desired two-dimensional field of view. The number of laser emitters included in the Lidar system of the present application may be approximately the same as the number of channels or lines of the Lidar system. For example, if the VFOV is 60 degrees and the resolution is 0.3 degree, then the number of laser emitters included in the Lidar system is two hundred (60/0.3=200). In another example, if the VFOV is 60 degrees and the resolution is 0.1 degree, then the number of laser emitters included in the Lidar system is six hundred (60/0.1=600). In addition to laser emitters that are used for detecting distance information of the environment, the Lidar system of the present application may include additional laser emitters for various purposes. For example, more laser emitters may be included for self-diagnosis, calibration, or measuring background light. In another example, additional laser emitters may be included for detecting range information of objects in a near field zone, such as zones that are within a few meters of a Lidar system. These additional laser emitters may be disposed adjacent to those for measuring distance and will not change the general 1D arrangement of the laser emitters. According to another embodiment of the present application, the Lidar system may include redundant laser emitters that will be used for backup emitters upon the failure of other laser emitters. For example, the number of laser emitters may double the number of channels or lines and are divided into two 1D arrays: a first 1D array is used for distance measurement while a second 1D array is used as redundant source. In this way, when a laser emitter in the first array fails, the Lidar system can active a redundant laser emitter in the second array. More detailed descriptions related to the redundant laser emitters will be provided with regard to Fig. 3b.

According to another embodiment, laser emitters of the emitting module 300 may be controlled individually or as a group. A driving circuit 302, 316 may control one or more laser emitters. According to one example, a driving circuit may control one group of laser emitters, which can reduce the number of driving circuits of an emitting module and simplify control operations. As shown in Fig. 3a, the emitting module 300 includes 6 driving circuits and 15 laser emitters. Thus, the drive circuit D1 is configured to control laser emitters LE1 and LE2; the drive circuit D2 is configured to control laser emitters LE3-LE5; and the drive circuit D3 is configured to control laser emitters LE6-LE9.

Fig. 3b illustrates another configuration of an emitting module 303 according to an embodiment of the present application. The emitting module 303 have a supporting structure 339, such as a printed circuit board, a first array of laser emitters 328 that are formed by a plurality of laser banks 320, 322, 324, and 326, a second array of laser emitters 338, and a plurality of driving circuits 302 ... 316. The first array of laser emitters 328 represents those laser emitters that are needed to generate the required resolution along a vertical field of view. For example, if 128 channels or lines are required for the vertical direction, then 128 laser emitters are included in the first array 328. The second array of laser emitters 338 is included in the emitting module as backup laser emitters to the first array of 328. According to an embodiment, every laser emitter in the first array 328 has a paired laser emitter in the second array 338, and the fields of view of the second array are substantially identical as the fields of view of the first array 328.

According to an embodiment, the plurality of laser emitters in the first array 328 are further disposed onto a plurality of banks 320 ... 326, where each bank has a single semiconductor substrate. For example, the emitting module 303 has 128 laser emitters for the first array, and the 128 laser emitters can be divided and placed onto four banks 320, 322, 324, and 326, each having 32 laser emitters integrated onto a single substrate. According to another embodiment, each of the 128 laser emitters can have their own semiconductor substrate, and then group of the laser emitters are mounted to form a bank. The use of separate banks to hold and control the laser emitters has many benefits. First, by holding only a subset of the laser emitters of the Lidar system, a bank has a shorter dimension than a single bank holding all the laser emitters and can reduce the shifting of the pointing direction of a laser emitter caused by thermal cycles. In addition, the use of a plurality of smaller banks allows more flexibility to be arranged on the PCB 339. As shown in Fig. 3b, each of the four banks 320, 322, 324, and 326, when placed on the PCB, may have their respective horizonal and vertical pitches that may or may not be identical to each other.

According to an embodiment, each bank of laser emitters 320, 322, 324, and 326 may have the same number of laser emitters and identical pitches among the laser emitters to generate a uniformly distributed field of view. According to another embodiment, when a non-uniform distribution of laser emitters along the vertical field of view is desired, banks 320, 322, 324, and 326 may be placed on the PCB with overlapping zones to create a non-uniform distribution of laser emitters. According to another embodiment, each bank of laser emitters may have different number of laser emitters with different pitches, providing even greater flexibility to create a non-uniform distribution of laser emitters and thus non-uniform VFOV

As shown in Fig. 3b, the emitting module 303 further includes a second array of laser emitters 338 that are formed by banks of 330, 332, 334, and 336. As the second array of laser emitters 338 is intended to act as a replacement of the first array 328, laser emitters of bank 330 are configured to have a substantially identical field of view as those of bank 320. Similarly, banks 332, 334, and 336 have similar fields of view as banks 322, 324, 326, respectively. Because a laser emitter tends to fail before other components of a Lidar system, the second and redundant array of laser emitter 338 can extend the operational life of a Lidar before any repair or replacement is needed.

As shown in Fig. 3b, the emitting module 303 further has a plurality of driving circuits 302, 304, ..., 316 for driving the plurality of banks of laser emitters. The driving circuits are capable of individually controlling each laser emitters in each bank. According to an embodiment, the banks of laser emitters and the driving circuits have a one-to-one correspondence. As the laser emitters are individually addressable, they can be actuated by the driving circuit sequentially or in any combination. According to another embodiment, each bank may be controlled by two or more driving circuits. In this way, when multiple laser emitters of the same bank are activated simultaneously, each can generate light pulses according to a different driving circuit.

Each of the driving circuits 302, 304, ... 316 is capable of causing a controlled laser emitter to generate a unique patten of laser beams. According to an embodiment, each driving circuit stores a plurality of pulse profiles for generating laser pulses. A pulse profile specifies a plurality of parameters for laser pulses. The parameters for the laser pulses may include the number of pulses, power and width of each pulse, intervals between adjacent pulses, etc. The profiles for the laser pulses may be switched or dynamically adjusted for each measurement in accordance with detecting results obtained from the detecting module or data input from other sensors or modules, such as weather, traffic condition, GPS location, and vehicle speed. According to another embodiment, the driving circuits are further capable of adjusting a starting time to activate the laser emitters, further distinguishing laser pulses generated by each laser emitter. When laser beams generated by laser emitters have their own unique patterns, the cross-channel interference at the detecting module caused by concurring laser beams can be greatly reduced.

### Operation of Laser Emitters

### A. Selective Activation of Laser Emitters

The emitting module of the present application is configured to active a plurality of laser emitters in parallel. Unlike other methods that activate an entire row of column of laser emitters or entire laser emitters for convenience, the emitting module selectively actives multiple laser emitters to reduce crosstalk that may occur at the detecting module due to cross channel interferences. **In an** example as shown in Fig. 4, the emitting module of the present application may active a laser emitter in each bank. For example, laser emitter 400 in bank 320, laser emitter 403 in bank 322, laser emitter 404 in bank 324, and laser emitter 406 in bank 326 are activated substantially at the same time and generate laser beams 410, 412, 414, and 416, respectively. As the fields of view of the laser emitters 400, 402, 404, and 406 have large separations and little overlap, their return laser beams will have little or no overlap on the photosensor, therefore reducing crosstalk at the detecting module. According to an embodiment, the emitting module selects laser emitters to be activated in parallel based on the transmitting directions of the laser beams generated by the laser emitters. According to an embodiment, the emitting module selects laser emitters to be activated in parallel based on the distances among these laser emitters. As a result, the emitting module does not need to select only one laser emitter from each bank to be activated in parallel. The emitting module may active multiple laser emitters of the same bank as long as those laser emitters do not have overlapped fields of view or physically far apart. Also, laser emitters that emit light at adjacent times should not have overlapped fields of view or as far as possible.

According to an embodiment, the number of laser emitters that are activated in parallel is set to be no more than one eighth of the total number of laser emitters needed for creating the resolution along a predetermined direction, such as the vertical direction, or no more than one sixteenth thereof, or no more than one thirty-second thereof. For example, when 128 laser emitters are needed for the vertical resolution, the laser emitters that are active in parallel may be no more than 16, 6, or 4 laser emitters, which corresponds to 1/8, 1/16, or 1/32 of the 128 laser emitters, respectively. The predetermined direction may be understood as the direction along which the emitting module electronically scan its laser emitters. For example, the laser emitters shown in Figs. 3a and 4 may be electronically and sequentially activated along the vertical direction while a mechanical actuation is used to scan them horizontally. **In** such a configuration, the vertical direction represents the predetermined direction.

As the laser emitters are arranged in a substantially 1D array, they can illuminate a narrow field of view along a vertical direction and a horizontal scan may be used to enlarge the field of view of a Lidar system of the present application. According to an embodiment, the scanning of the horizontal direction is implemented by a mechanical scanner, such as a motor or a spinning mirror. The scanning frequency of the horizontal direction may be between 5 to 20 Hz, which is slower than the frequency of the vertical scan, which may be 10, 100, 200, 500 or 1000 or 2000 or 3000 time faster than the horizontal scan.

According to an embodiment, the laser emitter may be activated according to a firing pattern. The firing pattern defines firing frequencies and sequence among the laser emitters and is adjustable in real-time according to detection results. For example, the laser emitters may first be activated according to a predetermined firing pattern. Upon the detection of a region of interests, such as an obstacle in front of a vehicle, the control module may instruct laser emitters covering the region of interests to be activated with a higher frequency to generate denser data points. In another example, when a moving object is detected, the control module may configure the firing sequence of the laser emitters to generate more data points for the moving object.

### B. Unique Laser Beams Generated by Each Laser Emitter

The emitting module of the present application may implement additional measures to reduce interferences caused by concurring laser beams generated either by the same Lidar system or other illumination sources. According to an embodiment, for laser emitters that are activated in parallel, each or at least part of them may generate a unique or different laser profile such that a detecting module may rely on the unique laser profile to determine whether a detected return laser beam is transmitted from the correct channel or not. For example, when four laser emitters are actuated as shown in Fig. 4, the driving circuits may cause each laser emitter to generate laser beam according to four different laser profiles. As describe in previous section, a laser profile may include parameters for different types of laser beams. For pulsed laser beams, parameters such as number of laser pulses, width of each pulse, power of each pulse, and time interval between adjacent pulses are used by the laser profile to define generated laser pulses. For continuous wave laser beams, frequency and amplitude are used to define the laser wave.

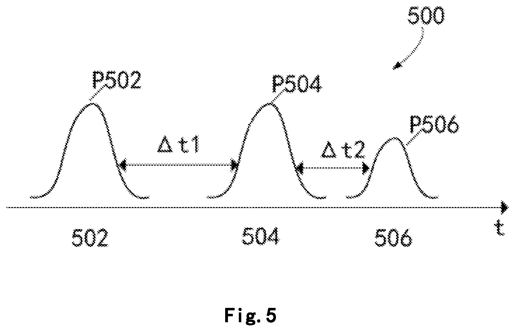

Fig. 5 illustrates an exemplary sequence of laser pulses defined by a laser profile according to an embodiment of the present application. The sequence of laser pulses 500 includes three pulses 502, 504, 506. Although Fig. 5 shows only three pulses, greater or smaller number of pulses may be defined by a laser profile. The laser profile can further define the peak powers P502, P504, and P506 for each laser pulse. According to an embodiment, the first pulse 506 may have a lower power P506 than the subsequent pulses 502 and 504, which may have similar peak powers. The time intervals Δt1 and Δt2 between adjacent pulses can also be adjusted by the laser profile. For example, the time interval Δt2 between pulse 506 and pulse 504 is shorten than the time interval Δt1 between pulse 504 and pulse 502. Furthermore, the width of each pulse may also be adjustable by the laser profile. By adjusting these parameters, the laser profile can define many patterns for a pulse sequence generated by a laser emitter, thus ensuring that each of those concurring laser beams has a unique profile and is distinguishable from other laser beams.

### Operation of the Emitting Module

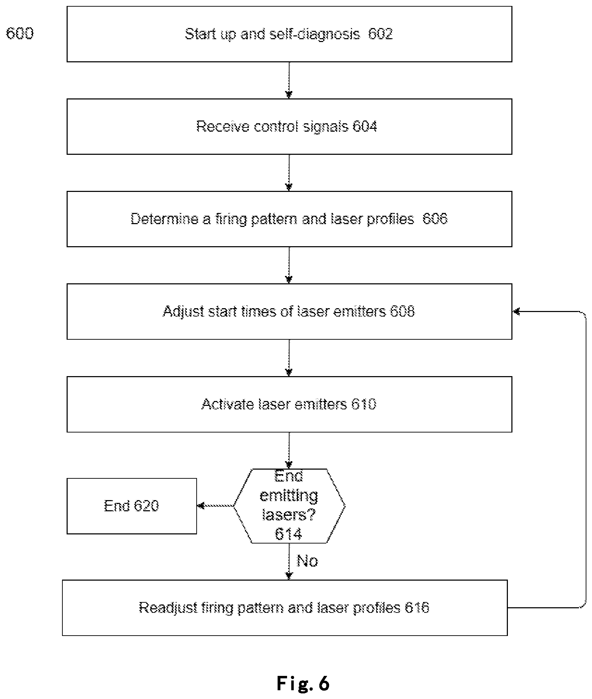

Fig. 6 illustrates a method for controlling the emitting module of a Lidar system according to an embodiment of the present application. The control method 600 starts with an initiation and self-diagnosis step 602, during which the electric power is provided to the driving circuit and the emitting module undergoes a self-diagnostic process. The self-diagnosis aims to discover any equipment issues or failures of the emitting module, such as power level and operability of each laser emitter. When the self-diagnostic step does not report any issues, the emitting module transmits a message to a control module and receives control signals and data from other sensors at step 604. The control signals may include scanning frequency along a vertical field of view and the number of laser emitters to be activated in parallel. Data from other sensors may include temperature, weather condition, and level of background light. At step 606, the emitting module determines a firing pattern of the laser emitters and laser profiles for each laser emitter. At step 608, the emitting module randomly adjusts the start time of each laser emitter with a predetermined offset, such as 1, 2, 3, 4, and 5 ns. At step 610, the laser emitters are activated according to the fire pattern, laser profile, and start time determined at step 608. After the first set of laser emitters are activated, it is determined whether an emission of laser beams need to be stopped at step 614. If a stop signal is received, the control method goes to step 620 to stop laser emitters from emitting laser beams. According to an embodiment, the step 614 may be implemented after all laser emitters have been activated.

At step 616, the firing patterns and laser profiles are adjusted according to real-time detection results. According to an embodiment, a region of interest, such as an obstacle in a field of view, may be determined based on a detection result, and more laser beams may be directed to that region of interest to obtain denser measurements. According to another embodiment, the powers of the emitted laser pulses are adjusted to increase a signal to noise ratio, avoid blinding the detectors, or avoid any potential harm to human eyes. The adjustment of laser powers of a present channel can be based on a detecting result of a preceding channel, either the same channel or a different channel. As the electronical scanning of the laser emitters along a vertical direction has a very short cycling period, such as 200 us or 100 us or even shorter, either detection results of the same channel or a channel that was activated immediately before the present channel can indicate object information to be detected by the present channel. When detection results of the same channel are used to adjust laser power, the detection results need to be obtained within one or two cycling periods from the present channel. When detection results of a different channel are used, the separation between the fields of view of these two channels need to be within a predetermined threshold, such as 0.5, 1, or 2 degrees along a vertical direction. Parameters of the detection results that may be used for adjusting laser power include range, reflectivity, level of background light, saturation level of photodetectors and exc. Once the firing pattern and the laser profile have been adjusted, the process goes to step 608 to continue activating the laser emitters.

A non-transitory storage medium as used in the present application for storing an executable program may include any medium that is suitable for storing digital data, such as a magnetic disk, an optical disc, a magneto-optical disc, flash or EEPROM, SDSC (standard-capacity) card (SD card), or a semiconductor memory. A storage medium may also have an interface for coupling with another electronic device such that data stored on the storage medium may be accessed and/or executed by other electronic device.

## Claims

1. A Lidar system for detecting distance information, comprising:
an emitting module (110, 303) that emits laser beams for detecting distance information and includes a first array (328) of laser emitters that are arranged along a vertical direction and disposed into a plurality of banks (320, 322, 324, 326), such that a subset of the laser emitters forms a single bank of the plurality of banks, wherein the emitting module (303) electronically scans the laser beams along the vertical direction;
a plurality of driving circuits (302, 304, ..., 316) configured to drive the plurality of banks of laser emitters, the plurality of driving circuits (302, 304, ..., 316) being capable of individually controlling each laser emitter in each of the banks;
a mechanical scanner (125) configured to cause the first array of laser emitters to scan along a horizontal direction, wherein the vertical direction is a rotation axis of the mechanical scanner, and the horizontal direction is a direction that is orthogonal to the vertical direction; and
a detecting module (130) that detects returned laser beams generated by the first array of laser emitters and determines distance information based on returned laser beams, wherein the emitting module (303) is configured to activate a plurality of laser emitters in parallel for detecting an external environment, the number of said plurality of activated laser emitters being no more than one half of the total number of the laser emitters of the first array.

2. The Lidar system according to claim 1, wherein a vertical scanning frequency is at least 100 times faster than a horizontal scanning frequency.

3. The Lidar system according to claim 2, wherein the emitting module (303) is further configured to scan the first array of laser emitters along the vertical direction according to a firing pattern that reduces crosstalk caused by concurring laser beams,
or
wherein the emitting module (303) is configured to sequentially scan laser emitters within each bank, wherein preferably laser emitters within each bank are individually addressable.

4. The Lidar system according to claim 1, wherein a vertical field of view of the Lidar system is formed by the first array of laser emitters, wherein the vertical field of view represents a vertical angular coverage by the laser emitters of the first array,
wherein the Lidar system preferably
further comprises a second array of laser emitters.

5. The Lidar system according to claim 1, wherein adjacent banks are offset from each other both vertically and horizontally.

6. The Lidar system according to claim 5, wherein laser emitters are uniformly distributed within a bank, and the first array of laser emitters are non-uniformly distributed along the vertical direction,
or
wherein laser emitters are non-uniformly distributed within a bank, and the first array of laser emitters are non-uniformly distributed along the vertical direction,
or
wherein each bank has a same number of laser emitters.

7. The Lidar system according to claim 1, wherein, when a plurality of laser emitters are activated in parallel, at least one of the activated laser emitters emit a unique laser beam according to a laser profile that is different from laser beams of other laser emitters.

8. The Lidar system according to claim 7, wherein the laser profile defines parameters of a sequence of laser pulses that are used for a single measurement of distance, wherein preferably the emitting module (303) is configured to adjust the laser profile in real-time based on a detection result of the detecting module (130),
or
wherein the emitting module (303) is further configured to adjust a starting time for the activated laser emitters.

9. The Lidar system according to claim 1, wherein the scanner includes a spinning mirror, wherein preferably
the spinning mirror has at least two reflecting surfaces.

10. The Lidar system according to claim 1, further comprising a mirror (163) that is disposed between
the scanner (125) and the emitting module (110, 303) and configured to direct a laser beam generated by the emitting module (303) to the scanner,
wherein preferably
the mirror has a size that is smaller than a spot of a return beam such that a substantial portion of the returned laser beams bypasses the mirror via peripheral zones of the mirror and impinges on the detecting module (130).

11. A method of a Lidar for detecting distance information, comprising:
arranging a first array of laser emitters along a vertical direction;
separating the first array of lasers into a plurality of banks, such that a subset of the laser emitters forms a single bank of the plurality of banks;
driving the plurality of banks of laser emitters by the plurality of driving circuits (302, 304, ..., 316) being capable of individually controlling each laser emitter in each of the bank;
activating a plurality of laser emitters in parallel for scanning an external environment,
wherein the number of said plurality of activated laser emitters is no more than one half of the total number of the laser emitters of the first array;
scanning the first array of laser emitters along a horizontal direction, wherein the vertical direction is a rotation axis of the mechanical scanner, and the horizontal direction is a direction that is orthogonal to the vertical direction;
detecting returned laser beams generated by the first array of laser emitters; and
determining distance information based on returned laser beams.

12. The method according to claim 11, further comprising electronically scanning the first array of laser emitters along a vertical direction without an assistance of a mechanical moving part, further comprising scanning the first array of laser emitters along the vertical direction according to a firing pattern that reduces crosstalk caused by concurring laser beams,
further preferably
comprising sequentially scanning laser emitters within each bank, and activating at least two laser emitters from different banks in parallel.

13. The method according to claim 11, offsetting adjacent banks both vertically and horizontally, further preferably
arranging laser emitters within a bank, and arranging the first array of laser emitters non-uniformly along the vertical direction.

14. The method according to claim 11, further comprising, when the at least two laser emitters are activated together, causing each of the activated laser emitters to emit a laser beam that has a laser profile different from other activated laser emitters.

15. The method according to claim **14,** further comprising adjusting the laser profile in real-time based on a detection result of the detecting module (130),
or
further comprising adjusting a starting time for the activated laser emitters.

## Patentansprüche

1. Lidar-System zum Detektieren von Entfernungsinformationen, umfassend:
ein Emissionsmodul (110, 303), das Laserstrahlen zum Detektieren von Entfernungsinformationen emittiert und eine erste Anordnung (328) von Laseremittern beinhaltet, die entlang einer vertikalen Richtung angeordnet und in einer Vielzahl von Bänken (320, 322, 324, 326) angeordnet sind, so dass eine Teilmenge der Laseremitter eine einzelne Bank der Vielzahl von Bänken bildet, wobei das Emissionsmodul (303) die Laserstrahlen entlang der vertikalen Richtung elektronisch abtastet;
eine Vielzahl von Ansteuerschaltungen (302, 304, ..., 316), die konfiguriert sind, die Vielzahl von Bänken von Laseremittern anzusteuern, wobei die Vielzahl von Ansteuerschaltungen (302, 304, ..., 316) in der Lage ist, jeden Laseremitter in jeder der Bänke einzeln zu steuern;
eine mechanische Abtasteinrichtung (125), die konfiguriert ist, zu verursachen, dass die erste Anordnung von Laseremittern entlang einer horizontalen Richtung abzutasten, wobei die vertikale Richtung eine Rotationsachse der mechanischen Abtasteinrichtung ist und die horizontale Richtung eine Richtung ist, die orthogonal zur vertikalen Richtung ist; und
ein Detektionsmodul (130), das zurückkehrende Laserstrahlen detektiert, die von der ersten Anordnung von Laseremittern erzeugt werden, und Entfernungsinformationen basierend auf zurückkehrenden Laserstrahlen bestimmt, wobei das Emissionsmodul (303) konfiguriert ist, eine Vielzahl von Laseremittern parallel zum Detektieren einer äußeren Umgebung zu aktivieren, wobei die Anzahl der Vielzahl von aktivierten Laseremittern nicht mehr als eine Hälfte der Gesamtanzahl der Laseremitter der ersten Anordnung beträgt.

2. Lidar-System nach Anspruch 1, wobei eine vertikale Abtastfrequenz mindestens 100-mal schneller ist als eine horizontale Abtastfrequenz.

3. Lidar-System nach Anspruch 2, wobei das Emissionsmodul (303) ferner konfiguriert ist, die erste Anordnung von Laseremittern entlang der vertikalen Richtung gemäß einem Zündmuster abzutasten, das Übersprechen reduziert, das durch gleichzeitig auftretende Laserstrahlen verursacht wird,
oder
wobei das Emissionsmodul (303) konfiguriert ist, Laseremitter innerhalb jeder Bank sequenziell abzutasten, wobei vorzugsweise Laseremitter innerhalb jeder Bank einzeln adressierbar sind.

4. Lidar-System nach Anspruch 1, wobei ein vertikales Sichtfeld des Lidar-Systems durch die erste Anordnung von Laseremittern gebildet wird, wobei das vertikale Sichtfeld eine vertikale Winkelabdeckung durch die Laseremitter der ersten Anordnung darstellt,
wobei das Lidar-System vorzugsweise
ferner eine zweite Anordnung von Laseremittern umfasst.

5. Lidar-System nach Anspruch 1, wobei benachbarte Bänke sowohl vertikal als auch horizontal zueinander versetzt sind.

6. Lidar-System nach Anspruch 5, wobei Laseremitter innerhalb einer Bank gleichmäßig verteilt sind und die erste Anordnung von Laseremittern entlang der vertikalen Richtung ungleichmäßig verteilt ist,
oder
wobei Laseremitter innerhalb einer Bank ungleichmäßig verteilt sind und die erste Anordnung von Laseremittern entlang der vertikalen Richtung ungleichmäßig verteilt ist,
oder
wobei jede Bank eine gleiche Anzahl von Laseremittern aufweist.

7. Lidar-System nach Anspruch 1, wobei, wenn eine Vielzahl von Laseremittern parallel aktiviert wird, mindestens einer der aktivierten Laseremitter einen einzigartigen Laserstrahl gemäß einem Laserprofil emittiert, das sich von Laserstrahlen anderer Laseremitter unterscheidet.

8. Lidar-System nach Anspruch 7, wobei das Laserprofil Parameter einer Sequenz von Laserpulsen definiert, die für eine einzelne Messung von Entfernung verwendet werden, wobei vorzugsweise das Emissionsmodul (303) konfiguriert ist, das Laserprofil in Echtzeit basierend auf einem Detektionsergebnis des Detektionsmoduls (130) anzupassen,
oder
wobei das Emissionsmodul (303) ferner konfiguriert ist, eine Startzeit für die aktivierten Laseremitter anzupassen.

9. Lidar-System nach Anspruch 1, wobei die Abtasteinrichtung einen rotierenden Spiegel beinhaltet,
wobei vorzugsweise
der rotierende Spiegel mindestens zwei reflektierende Oberflächen aufweist.

10. Lidar-System nach Anspruch 1, ferner umfassend einen Spiegel (163), der zwischen der Abtasteinrichtung (125) und dem Emissionsmodul (110, 303) angeordnet ist und konfiguriert ist, einen von dem Emissionsmodul (303) erzeugten Laserstrahl zu der Abtasteinrichtung zu lenken,
wobei vorzugsweise
der Spiegel eine Größe aufweist, die kleiner ist als ein Fleck eines zurückkehrenden Strahls, so dass ein wesentlicher Teil der zurückkehrenden Laserstrahlen den Spiegel über periphere Zonen des Spiegels umgeht und auf das Detektionsmodul (130) auftrifft.

11. Verfahren eines Lidars zum Detektieren von Entfernungsinformationen, umfassend:
Anordnen einer ersten Anordnung von Laseremittern entlang einer vertikalen Richtung;
Trennen der ersten Anordnung von Lasern in eine Vielzahl von Bänken, so dass eine Teilmenge der Laseremitter eine einzelne Bank der Vielzahl von Bänken bildet;
Ansteuern der Vielzahl von Bänken von Laseremittern durch die Vielzahl von Ansteuerschaltungen (302, 304, ..., 316), die in der Lage sind, jeden Laseremitter in jeder der Bänke einzeln zu steuern;
Aktivieren einer Vielzahl von Laseremittern parallel zum Abtasten einer äußeren Umgebung,
wobei die Anzahl der Vielzahl von aktivierten Laseremittern nicht mehr als eine Hälfte der Gesamtanzahl der Laseremitter der ersten Anordnung beträgt;
Abtasten der ersten Anordnung von Laseremittern entlang einer horizontalen Richtung, wobei die vertikale Richtung eine Rotationsachse der mechanischen Abtasteinrichtung ist und die horizontale Richtung eine Richtung ist, die orthogonal zur vertikalen Richtung ist;
Detektieren zurückkehrender Laserstrahlen, die von der ersten Anordnung von Laseremittern erzeugt werden; und
Bestimmen von Entfernungsinformationen basierend auf zurückkehrenden Laserstrahlen.

12. Verfahren nach Anspruch 11, ferner umfassend elektronisches Abtasten der ersten Anordnung von Laseremittern entlang einer vertikalen Richtung ohne Unterstützung eines mechanisch beweglichen Teils,
ferner umfassend Abtasten der ersten Anordnung von Laseremittern entlang der vertikalen Richtung gemäß einem Zündmuster, das Übersprechen reduziert, das durch gleichzeitig auftretende Laserstrahlen verursacht wird,
ferner vorzugsweise
umfassend sequenzielles Abtasten von Laseremittern innerhalb jeder Bank und paralleles Aktivieren von mindestens zwei Laseremittern aus verschiedenen Bänken.

13. Verfahren nach Anspruch 11, Versetzen benachbarter Bänke sowohl vertikal als auch horizontal,
ferner vorzugsweise
Anordnen von Laseremittern innerhalb einer Bank und ungleichmäßiges Anordnen der ersten Anordnung von Laseremittern entlang der vertikalen Richtung.

14. Verfahren nach Anspruch 11, ferner umfassend, wenn die mindestens zwei Laseremitter zusammen aktiviert werden, Verursachen, dass jeder der aktivierten Laseremitter einen Laserstrahl emittiert, der ein Laserprofil aufweist, das sich von anderen aktivierten Laseremittern unterscheidet.

15. Verfahren nach Anspruch 14, ferner umfassend Anpassen des Laserprofils in Echtzeit basierend auf einem Detektionsergebnis des Detektionsmoduls (130),
oder
ferner umfassend Anpassen einer Startzeit für die aktivierten Laseremitter.

## Revendications

1. Système Lidar pour détecter des informations de distance, comprenant :
un module émetteur (110, 303) qui émet des faisceaux laser pour détecter des informations de distance et
comporte un premier réseau (328) d'émetteurs laser qui sont agencés le long d'une direction verticale et disposés en une pluralité de bancs (320, 322, 324, 326), de sorte qu'un sous-ensemble des émetteurs laser forme un seul banc de la pluralité de bancs, dans lequel
le module émetteur (303) balaie électroniquement les faisceaux laser le long de la direction verticale ;
une pluralité de circuits de commande (302, 304, ..., 316) configurés pour piloter la pluralité de bancs d'émetteurs laser, la pluralité de circuits de commande (302, 304, ..., 316) étant capables de commander individuellement chaque émetteur laser dans chacun des bancs ;
un dispositif de balayage mécanique (125) configuré pour amener le premier réseau d'émetteurs laser à balayer le long
d'une direction horizontale, dans lequel la direction verticale est un axe de rotation du dispositif de balayage mécanique, et la direction horizontale est une direction qui est orthogonale à la direction verticale ; et
un module de détection (130) qui détecte des faisceaux laser renvoyés générés par le premier réseau d'émetteurs laser et détermine des informations de distance sur la base des faisceaux laser renvoyés, dans lequel le module émetteur (303) est configuré pour activer en parallèle une pluralité d'émetteurs laser pour détecter un environnement externe, le nombre de ladite pluralité d'émetteurs laser activés ne dépassant pas la moitié du nombre total des émetteurs laser du premier réseau.

2. Système Lidar selon la revendication 1, dans lequel une fréquence de balayage vertical est au moins 100 fois plus rapide qu'une fréquence de balayage horizontal.

3. Système Lidar selon la revendication 2, dans lequel le module émetteur (303) est également configuré pour balayer le premier réseau d'émetteurs laser le long de la direction verticale selon un modèle de tir qui réduit la diaphonie causée par des faisceaux laser concurrents,
ou
dans lequel le module émetteur (303) est configuré pour balayer séquentiellement les émetteurs laser de chaque banc, dans lequel de préférence les émetteurs laser de chaque banc sont individuellement adressables.

4. Système Lidar selon la revendication 1, dans lequel un champ de vision vertical du système Lidar est formé par le premier réseau d'émetteurs laser, dans lequel le champ de vision vertical représente une couverture angulaire verticale par les émetteurs laser du premier réseau,
dans lequel le système Lidar comprend également de préférence un second réseau d'émetteurs laser.

5. Système Lidar selon la revendication 1, dans lequel les bancs adjacents sont décalés les uns par rapport aux autres verticalement et horizontalement.

6. Système Lidar selon la revendication 5, dans lequel des émetteurs laser sont distribués de manière uniforme au sein d'un banc, et le premier réseau d'émetteurs laser est distribué de manière non uniforme le long de la direction verticale,
ou
dans lequel des émetteurs laser sont distribués de manière non uniforme au sein d'un banc, et le premier réseau d'émetteurs laser est distribué de manière non uniforme le long de la direction verticale,
ou
dans lequel chaque banc a un même nombre d'émetteurs laser.

7. Système Lidar selon la revendication 1, dans lequel, lorsqu'une pluralité d'émetteurs laser sont activés en parallèle, au moins un des émetteurs laser activés émet un faisceau laser unique selon un profil laser qui est différent de celui de faisceaux laser d'autres émetteurs laser.

8. Système Lidar selon la revendication 7, dans lequel le profil laser définit des paramètres d'une séquence d'impulsions laser qui sont utilisées pour une seule mesure de distance, dans lequel de préférence le module émetteur (303) est configuré pour régler le profil laser en temps réel sur la base d'un résultat de détection du module de détection (130),
ou
dans lequel le module émetteur (303) est également configuré pour régler un temps de démarrage pour les émetteurs laser activés.

9. Système Lidar selon la revendication 1, dans lequel le dispositif de balayage comporte un miroir rotatif,
dans lequel de préférence
le miroir rotatif a au moins deux surfaces réfléchissantes.

10. Système Lidar selon la revendication 1, comprenant également un miroir (163) qui est disposé entre le dispositif de balayage (125) et le module émetteur (110, 303) et configuré pour diriger un faisceau laser généré par le module émetteur (303) vers le dispositif de balayage,
dans lequel de préférence
le miroir a une taille qui est plus petite qu'un point d'un faisceau de retour de sorte qu'une partie substantielle des faisceaux laser renvoyés contourne le miroir via des zones périphériques du miroir et frappe le module de détection (130).

11. Procédé d'un Lidar pour détecter des informations de distance, comprenant :
l'agencement d'un premier réseau d'émetteurs laser le long d'une direction verticale ;
la séparation du premier réseau de lasers en une pluralité de bancs, de sorte qu'un sous-ensemble des émetteurs laser forme un seul banc de la pluralité de bancs ;
le pilotage de pluralité de bancs d'émetteurs laser par la pluralité de circuits de commande (302, 304, ..., 316) étant capables de commander individuellement chaque émetteur laser dans chacun des bancs ;
l'activation en parallèle d'une pluralité d'émetteurs laser pour balayer un environnement externe,
dans lequel le nombre de ladite pluralité d'émetteurs laser activés ne dépasse pas la moitié du nombre total des émetteurs laser du premier réseau ;
le balayage du premier réseau d'émetteurs laser le long d'une direction horizontale, dans lequel la direction verticale est un axe de rotation du dispositif de balayage mécanique, et la direction horizontale est une direction qui est orthogonale à la direction verticale ;
la détection de faisceaux laser renvoyés générés par le premier réseau d'émetteurs laser ; et
la détermination d'informations de distance sur la base de faisceaux laser renvoyés.

12. Procédé selon la revendication 11, comprenant également le balayage électronique du premier réseau d'émetteurs laser le long d'une direction verticale sans l'assistance d'une pièce mobile mécanique,
comprenant également le balayage du premier réseau d'émetteurs laser le long de la direction verticale selon un modèle de tir qui réduit la diaphonie causée par des faisceaux laser concurrents,
de préférence également
comprenant le balayage séquentiel d'émetteurs laser au sein de chaque banc, et l'activation en parallèle d'au moins deux émetteurs laser provenant de bancs différents.

13. Procédé selon la revendication 11, le décalage de bancs adjacents à la fois verticalement et horizontalement,
de préférence également
l'agencement d'émetteurs laser au sein d'un banc, et l'agencement du premier réseau d'émetteurs laser de manière non uniforme le long de la direction verticale.

14. Procédé selon la revendication 11, comprenant également, lorsque les au moins deux émetteurs laser sont activés ensemble, le fait d'amener chacun des émetteurs laser activés à émettre un faisceau laser qui a un profil laser différent de celui d'autres émetteurs laser activés.

15. Procédé selon la revendication 14, comprenant également le réglage en temps réel du profil laser sur la base d'un résultat de détection du module de détection (130),
ou
comprenant également le réglage d'un temps de démarrage pour les émetteurs laser activés.
